# EUROPEAN PATENT APPLICATION

(11) **EP 4 769 602 A1**
(43) Date of publication of application: **01.07.2026**
(21) Application number: 25857522.4
(22) Date of filing: 22.08.2025
(51) Int. Cl.: H01M 10/04, H01M 10/058, H01M 10/052, H01M 50/105

(54) **METHOD FOR IMPREGNATING ELECTRODE FOR LITHIUM SECONDARY BATTERY WITH ELECTROLYTE, METHOD FOR MANUFACTURING LITHIUM SECONDARY BATTERY INCLUDING ELECTRODE IMPREGNATED WITH ELECTROLYTE BY METHOD, AND LITHIUM SECONDARY BATTERY INCLUDING ELECTRODE**

(30) Priority: 23.08.2024 KR 20240113676
(71) Applicant: LG ENERGY SOLUTION, LTD., Seoul 07335 (KR)
(72) Inventor: Hwang, Sunwook, Daejeon 34122 (KR); Lee, Eunji, Daejeon 34122 (KR); Kim, Dong Kyu, Daejeon 34122 (KR)
(74) Representative: BCKIP Part mbB
(86) International application number: PCT/KR2025/012834
(87) International publication number: WO 2026/043334

(57) **Abstract**

The present disclosure provides a method for wetting an electrolyte into an electrode for a lithium secondary battery, the method comprising fabricating and storing a roll assembly in a state where a long sheet-type electrode and a liquid electrolyte-wetted substrate are wound together, a method for manufacturing a lithium secondary battery using an electrode fabricated by the method, and a lithium secondary battery manufactured as described above.

## Description

### TECHNICAL FIELD

### Cross Citation with Related Application(s)

This application claims priority to and the benefit of Korean Patent Application No. 10-2024-0113676, filed on August 23, 2024, and Korean Patent Application No. 10-2025-0117578, filed on August 22, 2025, the disclosures of which are incorporated herein by reference in their entirety.

The present disclosure relate to a method for wetting an electrode electrolyte for a lithium secondary battery, a method for manufacturing a lithium secondary battery including an electrode wetted with electrolyte by the method, and a lithium secondary battery including the electrode.

### BACKGROUND

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charging/discharging characteristics, has a long cycle life, and is eco-friendly, and has been commercialized and widely used.

Meanwhile, such lithium secondary batteries are primarily used by wetting a liquid electrolyte into an electrode assembly including electrodes and a separator, however, the degree of liquid electrolyte wetting in such an electrode assembly has always emerged as an issue.

Specifically, the electrode assembly includes a porous electrode and a porous separator, and the battery must be fabricated in a state where the liquid electrolyte is sufficiently wetted to ensure that the battery performance is properly realized without further liquid injection; otherwise, there are problems such as a significant increase in resistance and a rapid decline in lifetime characteristics due to the depletion of an electrolyte.

Therefore, there is an urgent need develop a technology for a relatively simple method for manufacturing lithium secondary batteries that can address these issues and ensure sufficient electrolyte wetting of battery components.

### DETAILED DESCRIPTION OF THE INVENTION[

### Technical Problem

It is an object of the present disclosure to provide a method that can simply manufacture a battery without further electrolyte injection by allowing sufficient electrode wetting in an electrode.

### Technical Solution

In order to achieve the above object, according to an aspect of the present disclosure, provided is a method for wetting an electrolyte into an electrode for a lithium secondary battery, the method comprising fabricating and storing a roll assembly in a state where a long sheet-type electrode and a liquid electrolyte-wetted substrate are wound together.

In this case, the storage temperature of the roll assembly may be 30°C to 80°C, and the storage time may be 20 hours to 48 hours.

Here, the liquid electrolyte-wetted substrate may be a nonwoven fabric, a polymer membrane, or a separator.

In the method for wetting an electrolyte into the substrate, the liquid electrolyte wetted substrate may be fabricated by a dip-coating method in which the substrate is immersed into a liquid electrolyte solution.

The roll assembly may be fabricated by preparing the electrode wound in a roll form and the liquid electrolyte-wetted substrate also wound in a roll form, respectively, followed by unwinding them and rewinding them together.

On the other hand, according to another aspect of the present disclosure, provided is a method for manufacturing a lithium secondary battery using an electrode wetted with the liquid electrolyte.

Specifically, the lithium secondary battery is manufactured by incorporating an electrode assembly containing an electrode and a separator into a secondary battery case, wherein the electrode is an electrolyte-wetted electrode which is fabricated by the method for wetting an electrolyte as described above.

Further, the separator may be an electrolyte-wetted separator in a state of being wetted with the liquid electrolyte before fabricating the electrode assembly.

In this case, the method for manufacturing a lithium secondary battery according to the present disclosure may not comprise a step of separately injecting a liquid electrolyte into the secondary battery case.

According to yet another aspect of the present disclosure, provided is a lithium secondary battery manufactured in this manner. Therefore, such a lithium secondary battery is a lithium secondary battery having a structure in which an electrode assembly comprising a liquid electrolyte-wetted electrode and a liquid electrolyte-wetted separator is incorporated into a secondary battery case,
wherein the liquid electrolyte existing in the secondary battery case without being wetted into the electrode or separator may account for 5% by weight or less, particularly 1% by weight or less, based on the total weight of the electrolyte.

The liquid electrolyte wetted into the electrode may be contained in an amount of 101% to 150% based on the total volume of the electrode, and the liquid electrolyte wetted into the separator may be contained in an amount of 100% to 150% based on the total volume of the separator.

Moreover, the interfacial resistance between the electrode and the separator may be 0.01Ω·cm² to 0.055Ω·cm².

Furthermore, the ionic resistance between the electrode and the separator may be 0.01Ω·cm² to 0.045Ω·cm².

### BRIEF DESCRIPTION OF THE DRAWINGS

Figure 1 is a schematic diagram showing a method for wetting an electrolyte into and electrode for a lithium secondary battery according to one embodiment of the present disclosure.
Figure 2 is a cross-sectional schematic diagram of a lithium secondary battery according to another embodiment of the present disclosure.

### DETAILED DESCRIPTION OF THE EMBODIMENTS

Hereinafter, embodiments of the present disclosure will be described in more detail to facilitate understanding of the invention.

Terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments and are not intended to limit the inventive concept. The singular forms include plural forms unless the context clearly indicates otherwise.

Further, throughout the description, when a portion is referred to as "including" or "comprising" a certain component, it means that the portion can further include other components, without excluding the other components, unless otherwise stated.

According to an embodiment of the present disclosure, there is provided a method for wetting an electrolyte into an electrode for a lithium secondary battery,
the method comprising fabricating and storing a roll assembly in a state where a long sheet-type electrode and a liquid electrolyte-wetted substrate are wound together.

Hereinafter, a method for wetting an electrolyte into an electrode for a lithium secondary battery according to an embodiment of the present disclosure will be described in more detail with reference to the drawings.

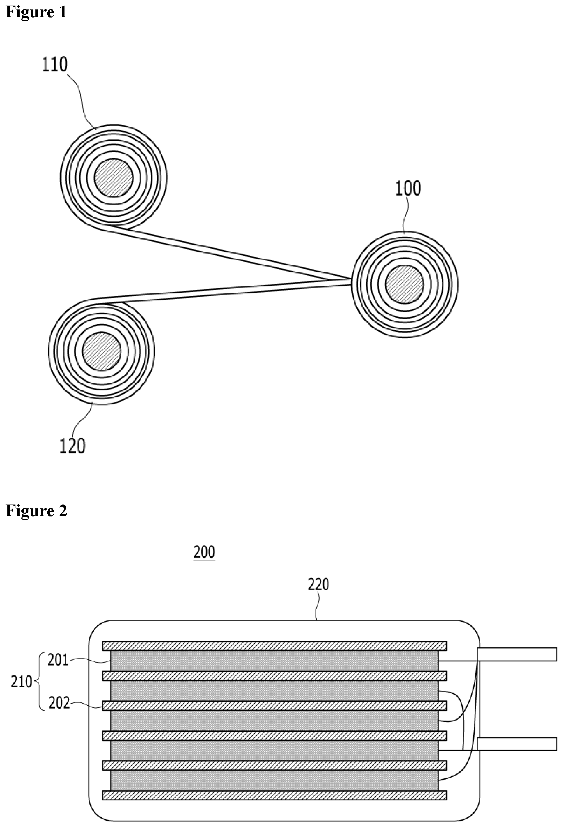

First, Figure 1 schematically shows a method for wetting an electrolyte into an electrode for a lithium secondary battery according to one embodiment of the present disclosure.

Referring to Figure 1, a long sheet-type electrode 110 and a liquid electrolyte-wetted substrate 120 are prepared in a roll form.

Here, the long sheet-type shaped electrode 110 has a structure in which an electrode mixture layer is formed on one surface or both surfaces of an electrode current collector.

Here, the electrode mixture layer is fabricated by dispersing an electrode active material, a binder, a conductive material, and the like in a solvent to form an electrode slurry, and applying the electrode slurry to one surface or both surfaces of an electrode current collector, followed by drying and rolling.

The electrode current collector is not particularly limited so long as it has conductivity without causing any chemical change in the battery. For example, as the current collector, stainless steel, copper, aluminum, nickel, titanium, fired carbon, or copper, aluminum or stainless steel of which surface is treated with one of carbon, nickel, titanium, silver, or the like may be used.

The electrode current collector may have a thickness of 3 *µ*m to 500 *µ*m, and may have fine protrusions and depressions formed on a surface thereof to enhance adherence of electrode mixture layer. For example, the electrode current collector may be used in various forms such as a film, a sheet, a foil, a net, a porous body, a foaming body, and a nonwoven fabric body.

The type of electrode active material layer varies depending on whether the long sheet-type electrode 110 is a positive electrode or a negative electrode.

The positive electrode includes a positive electrode active material, and the positive electrode active material is a compound capable of reversible intercalation and deintercalation of lithium, and specifically, it may include a lithium metal oxide or lithium metal phosphate including lithium and at least one metal such as iron, cobalt, manganese, nickel, or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where, 0 < Z < 2), etc.), lithium-nickel-cobalt-based oxide (e.g., LiNi_{1-Z1}Co_{Y1}O₂ (where, 0<Y1<1), etc.), lithium-manganese-cobalt-based oxide (e.g., LiCo_{1-Y2}Mn_{Y2}O₂ (where, 0<Y2<1), LiMn_{2-Z1}Co_{Z1}O₄ (where, 0 < Z1 < 2), etc.), lithium-nickel-manganese-cobalt-based oxide (e.g., Li(NiₚCo_{q}Mnᵣ)O₂ (where, 0 < p < 1, 0 < q < 1, 0 < r < 1, p+q+r=1) or Li(Niₚ₁Co_{q1}Mnᵣ₁)O₄(where, 0 < p1 < 2, 0 < q1 < 2, 0 < r1 < 2, p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2 and s2 are atomic fractions of each independent elements, wherein 0 < p2 < 1, 0 < q2 < 1, 0 < r2 < 1, 0 < s2 < 1, p2+q2+r2+s2=1), etc.), lithium iron phosphate (e.g., Li₁₊ₐFe₁₋ₓMₓ(PO_{4-b})X_{b} (where M is at least one selected from Al, Mg and Ti, X is at least one selected from F, S and N, and -0.5≤a≤+0.5, 0≤x≤0.5, 0≤b≤0.1), and any one thereof or a compound of two or more thereof may be included.

The negative electrode includes a negative electrode active material, and the negative electrode active material may include one or more selected from the group consisting of a lithium metal, a carbon material capable of reversible intercalation/deintercalation of lithium ions, metals or alloys of lithium and these metals, a metal composite oxide, a material capable of doping and de-doping lithium, and a transition metal oxide.

The carbon material capable of reversible intercalation/deintercalation of lithium ions may be used without particular limitation so long as it is a carbon-based negative electrode active material generally used in a lithium ion secondary battery, and, as a typical example thereof, crystalline carbon, amorphous carbon, or both thereof may be used. Examples of the crystalline carbon may be graphite such as amorphous, planar, flaky, spherical, or fibrous natural graphite or artificial graphite, and examples of the amorphous carbon may be soft carbon (low-temperature baked carbon) or hard carbon, mesophase pitch carbide, baked cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0 ≤ x ≤ 1), LiₓWO₂(0 ≤ x ≤ 1) and SnₓMe₁₋ₓMe'_{y}O_{z} (where Me: Mn, Fe, Pb, Ge; Me': Al, B, P, Si, Group I, II and III elements of the periodic table, halogen; 0<x≤1; 1≤y≤3; 1≤z≤8) may be used.

The material which can be doped and undoped with lithium may include Si, SiOₓ (where 0<x ≤ 2), Si-Y alloy (wherein Y is an element selected from the group consisting of an alkali metal, an alkaline earth metal, a Group 13 element, a Group 14 element, a transition metal, a rare earth element, and a combination thereof, and is not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, and is not Sn), or the like., and at least one of these may be mixed and used with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

Further, the conductive material is a component for further improving the conductivity of the electrode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium secondary battery and further enhance output characteristics.

Typically, the conductive material may be contained in an amount of 1 to 20% by weight, or 1 to 15% by weight, or 1 to 10% by weight, based on the total weight of the electrode mixture layer.

The binder optionally included in the electrode mixture layer is a component that assists in the bonding between the electrode active material and the conductive material and in the bonding to the electrode current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluorine rubber or the like. Mixtures or copolymers of two or more selected from these may also be used.

Typically, the binder may be included in an amount of 1 to 20% by weight, or 1 to 15% by weight, or 1 to 10% by weight based on the total weight of the electrode mixture layer.

In addition, a filler may be optionally added as a component for inhibiting the expansion thereof. Such a filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

Meanwhile, the liquid electrolyte-wetted substrate 120 is fabricated by wetting the substrate with the liquid electrolyte.

Here, the substrate is not limited as long as it is any porous material, and may be, for example, a nonwoven fabric, a polymer membrane, or a separator.

The nonwoven fabric may be, for example, a nonwoven fabric made of high-melting-point glass fiber, polyethylene terephthalate fiber, or the like.

Alternatively, the polymer membrane may be porous polymer films comprising a polyolefin-based polymer such as an ethylene homopolymer, a propylene homopolymer, an ethylene/butene copolymer, an ethylene/hexene copolymer and an ethylene/methacrylate copolymer, or a stacked structure of two or more layers thereof.

In addition, the separator may be a nonwoven fabric or a polymer membrane, or may be an SRS (Safety Reinforced Separator) membrane in which a coating layer containing a binding material and inorganic particles is formed on one surface or both surfaces of a substrate such as a nonwoven fabric or a polymer membrane.

The inorganic particle makes it possible to form an empty space between inorganic particles, and plays a role to form a fine porosity and also serves as a spacer capable of maintaining a physical form. Further, the inorganic particle has a feature of not having a physical property changed even at a high temperature of 200°C or higher, and thus the organic-inorganic mixed layer formed comes to have an excellent thermal resistance.

The inorganic particles are not particularly limited as long as they are electrochemically stable. In other words, the inorganic particles which may be used in the present disclosure are not particularly limited, unless they cause an oxidation and/or reduction reaction in a working voltage range of a battery to be applied. In particular, in case of using an inorganic particle having an ion transfer capacity, an ionic conductance in electrochemical elements may be increased to improve a performance, and thus the one having a high ion conductance is preferable, if possible. Further, if the inorganic particle has a high density, it is difficult to disperse such particles during preparation and there is a problem of increasing a weight when manufacturing a battery. Thus, the one having a small density is preferable, if possible. In addition, an inorganic material having a high dielectric constant contributes to an increase in a degree of dissociation of electrolytic salt in liquid electrolyte, e.g., lithium salt, thereby improving the ion conductivity of the electrolyte. Finally, inorganic particles having thermal conductivity are more preferable because they have excellent heat absorbing ability and therefore inhibit the phenomenon in which heat is concentrated locally to form a heat generation point, leading to thermal runaway.

For the reasons mentioned above, the inorganic particle is preferably one or more selected from the group consisting of (a) a high-dielectric constant inorganic particle having a dielectric constant of 1 or more, 5 or more, preferably 10 or more, (b) an inorganic particle having piezoelectricity, (c) a thermal conductive inorganic particle, and (d) an inorganic particle having a lithium ion transfer ability.

The inorganic particle having piezoelectricity means a material which is a non-conductor at atmospheric pressure, but which has an electrified property due to a change in an internal structure when a certain pressure is applied. Such inorganic particle exhibits a high dielectric characteristic, in which a dielectric constant is 100 or more, and if such inorganic particle is tensioned or compressed upon the application of a certain pressure, electric charges are generated to respectively charge one side positively and the other side negatively. Thus, such particle is a material which has a function of causing a potential difference between both sides.

Examples of the inorganic particle having piezoelectricity include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) hafnia (H_{f}O₂), a mixture thereof or the like, but are not limited thereto.

The inorganic particle having the lithium ion transfer capacity refers to an inorganic particle which contains a lithium element, but not storing lithium, and has a function of transferring a lithium ion. The inorganic particle having the lithium ion transfer capacity may transfer and move a lithium ion due to a kind of defects existing inside a structure of particle. Thus, such particle may prevent a decrease in lithium mobility, thereby preventing a decrease in a battery capacity.

Examples of the inorganic particle having the lithium ion transfer capacity include: lithium phosphate (Li₃PO₄), lithium titanium phosphate (LiₓTi_{y}(PO₄)₃, 0<x<2, 0<y<3), lithium aluminum titanium phosphate; (LiAlTiP)ₓO_{y}-based glass (0<x<4, 0<y<13) such as (LiₓAl_{y}Ti_{z}(PO₄)₃, 0<x<2, 0<y<1, 0<z<3), 14Li₂O-9Al₂O₃-38TiO₂-39P₂O₅, etc.; lithium lanthanum titanate (LiₓLa_{y}TiO₃, 0<x<2, 0<y<3); lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, etc.; lithium nitride (LiₓN_{y}, 0<x<4, 0<y<2) such as Li₃N, etc.; SiS₂-based glass (LiₓSi_{y}S_{z}, 0<x<3, 0<y<2, 0<z<4) such as Li₃PO₄-Li₂S-SiS₂, etc.; P₂S₅-based glass (LiₓP_{y}S_{z}, 0<x<3, 0<y<3, 0<z<7) such as LiI-Li₂S-P₂S₅, etc.; a mixture thereof; or the like, but are not limited thereto.

Further, examples of the inorganic particle having a dielectric constant of 1 or more include SrTiO₃, SnO₂, CeO₂, MgO, NiO, CaO, ZnO, ZrO₂, Y₂O₃, Al₂O₃, TiO₂, SiC, a mixture thereof or the like, but are not limited thereto.

The thermal conductive inorganic particle is a material which provides low thermal resistance but no electrical conductivity and thus have insulation properties, and may be, for example, at least one selected from the group consisting of aluminum nitride (AlN), boron nitride (BN), alumina (Al₂O₃), silicon carbide (SiC), and beryllium oxide (BeO), but are not limited thereto.

When the inorganic material having a high dielectric constant, the inorganic particle having piezoelectricity, the thermal conductive inorganic particle and the inorganic particle having the lithium ion transfer capacity are mixed and used, a synergistic effect thereof may be doubled.

A size of the inorganic particle is not limited, but in order to form an appropriate porosity between the inorganic particles, the size thereof is preferably in a range of 0.001 to 10 *µ*m, if possible. If such size is less than 0.001 *µ*m, dispersibility is deteriorated and thus it becomes difficult to adjust a physical property. If such size is more than 10 *µ*m, a thickness is increased to degrade the mechanical properties and also the coating layer does not fulfill a role thereof due to an excessively large pore size, and the chance of causing an internal short circuit increases when charging and discharging a battery.

A content of the inorganic particle is not particularly limited, but it is preferable that such content is in a range of 1 to 99% by weight, more preferably in a range of 10 to 95% by weight based on 100% by weight of a mixture of an inorganic particle and a binding material. If the content thereof is less than 1% by weight, the content of binding material becomes excessively large to decrease a pore size and a porosity due to a decrease in empty space formed between inorganic particles, and thus mobility of lithium ion may be deteriorated. In contrast, if the content thereof is more than 99% by weight, the content of the binding material becomes excessively small to deteriorate a mechanical property of the coating layer due to a weakened adhesive strength between inorganic materials.

On the other hand, the binding material is not limited, unless it causes a side reaction with the electrolyte. In particular, the binding material may be one of which a glass transition temperature (Tg) is as low as possible, preferably in the range of -200 to 200°C. This is because such binding material may improve the mechanical properties of a final insulating film.

Further, the binding material does not need to have ion conduction capacity, but it is more preferable to use a polymer having ion conduction capacity.

Thus, it is preferable that the binding material has a high dielectric constant. Indeed, a degree of dissociation of salt in an electrolyte depends on the dielectric constant of an electrolytic solvent, and consequently, as the dielectric constant of the polymer increases, the degree of dissociation of salt in the electrolyte may be improved. The dielectric constant of the polymer used may be 1 or more, particularly in a range of 1.0 to 100 (measurement frequency=1 kHz), and preferably 10 or more.

In addition to the functions described above, the binding material may have a feature of being gelled to show a high degree of electrolyte swelling during liquid electrolyte wetting. Indeed, if the binding material is a polymer having an excellent degree of electrolyte swelling, the electrolyte injected after assembling of a battery permeates the polymer, and the polymer retaining the absorbed electrolyte comes to have an ion conduction capacity for the electrolyte. Thus, if possible, a solubility index of the polymer is preferably in a range of 15 to 45 MPa^{1/2}, more preferably in a range of 15 to 25 MPa^{1/2} and 30 to 45 MPa^{1/2}. If the solubility index is less than 15 MPa^{1/2} and more than 45 MPa^{1/2}, it becomes difficult to have swelling with the liquid electrolyte for a conventional battery.

Examples of the binding material may be one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and polyvinyl alcohol.

Therefore, the substrate wetted with the liquid electrolyte itself may be used as a separator for a lithium secondary battery according to an embodiment of the present disclosure, or the separator may also be separately wetted and used with the electrolyte.

Meanwhile, the liquid electrolyte may be a lithium non-aqueous electrolyte, and the lithium non-aqueous electrolyte may include a lithium salt and a non-aqueous organic solvent.

In this case, the lithium salt is preferably used as a medium for transferring ions within a lithium secondary battery. For example, the lithium salt may include Li⁺ as a cation, and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more thereof. However, in terms of excellent stability, the lithium salt includes preferably Li(N(SO₂CF₃)₂.

In addition to these, any lithium salt commonly used in a lithium secondary battery electrolyte may be used without limitation.

The concentration of the lithium salt may be appropriately changed within a generally applicable range, but in order to obtain an optimal effect of forming a film for preventing corrosion on the electrode surface, the lithium salt may be included at a concentration of 0.5 M to 3 M, particularly at a concentration of 1 M to 2.5 M, and more particularly at a concentration of 1 M to 2 M in the electrolyte. When the concentration of the lithium salt satisfies the above range, the effect of improving the cycle characteristics during high-temperature storage of the lithium secondary battery is sufficient, and the viscosity of the electrolyte is appropriate, thereby capable of improving electrolyte wetting property.

The non-aqueous organic solvent is not limited as long as it can minimize decomposition due to an oxidation reaction or the like during the subsequent charge/discharge process of the lithium secondary battery, and can exhibit its properties together with an additive. For example, a carbonate-based organic solvent, an ether-based organic solvent, an ester-based organic solvent, and the like may be used alone or in mixture of two or more thereof, and specifically, a carbonate-based organic solvent may be used.

Among the organic solvents, the carbonate-based organic solvent may include at least one selected from the group consisting of a cyclic carbonate-based organic solvent and a linear carbonate-based organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include at least one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

As a specific example, the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

As a representative example, the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, low dielectric constant linear carbonate-based compound such as dimethyl carbonate and diethyl carbonate and a linear ester-based compound, in an appropriate ratio, an electrolyte having high electrical conductivity may be prepared, which may be more preferably used.

Moreover, the lithium non-aqueous electrolyte may further comprise a functional additive. The functional additive may be included to prevent the induction of breaking of the negative electrode in a high power environment, or to further improve low-temperature high-rate discharge characteristics, high-temperature stability, overcharge prevention, swelling improvement effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3% by weight to 5% by weight, and particularly 1% by weight to 5% by weight based on the total weight of the liquid electrolyte. When the amount of the sultone-based compound in the liquid electrolyte is more than 5% by weight, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3% by weight or less based on the total weight of the liquid electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3% by weight or less based on the total weight of the liquid electrolyte.

The sulfate-based compound may include ethylene sulfate(Esa), trimethylene sulfate(TMS), or methyl trimethylene sulfate(MTMS), and may be included in an amount of 3% by weight or less based on the total weight of the liquid electrolyte.

Further, the halogen-substituted carbonate-based compound may include fluoroethylene carbonate(FEC), and may be included in an amount of 5% by weight or less based on the total weight of the liquid electrolyte. When the amount of the halogen-substituted carbonate-based compound in the liquid electrolyte is more than 5% by weight, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3% by weight or less based on the total weight of the liquid electrolyte. When the content of the cyclic carbonate-based compound in the liquid electrolyte is more than 3% by weight, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3% by weight or less based on the total weight of the liquid electrolyte.

The borate-based compound may include lithium oxalyldifluoroborate, and may be included in an amount of 3% by weight or less based on the total weight of the liquid electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate (LiB(C₂O₄)₂) and LiBF₄, and may be included in an amount of 3% by weight less based on the total weight of the liquid electrolyte.

Two or more kinds of the functional additives may be mixed, and included in an amount of 20% by weight or less, particularly 0.1% by weight to 10% by weight, based on the total weight of the liquid electrolyte. When the content of the functional additive is more than 20% by weight, there is a possibility that excessive side reactions in the lithium non-aqueous electrolyte may occur during charge and discharge of the battery. In particular, it is not sufficiently decomposed at high temperatures, and may exist as an unreacted material or in a precipitated state in a lithium non-aqueous electrolyte at room temperature. Thereby, side reactions that degrade the lifetime or resistance characteristics of the lithium secondary battery may occur.

The liquid electrolyte-wetted substrate 120 may be fabricated by a dip-coating method, in which the above-described substrate is immersed into and then withdrawn from a liquid electrolyte solution.

After the long sheet-type electrode 110 and the liquid electrolyte-wetted substrate 120 are fabricated in this manner, the roll assembly 100 may be fabricated by preparing them wound in a roll form, followed by unwinding them and rewinding them together.

Further, after the roll assembly 100 is fabricated, a storage process is required so that the liquid electrolyte can be sufficiently wetted into the voids of the long sheet-type electrodes 110.

In this case the storage temperature may be 30°C or higher, specifically 30°C to 80°C, or more specifically 40°C to 60°C.

If the storage temperature is too low outside the above range, it will take too long for the liquid electrolyte to wet into the long sheet-type electrode 110, which causes a decrease in fabrication efficiency. If the storage temperature is too high, it may affect the quality of the electrode, which is not preparable.

Additionally, the storage time may be selected from the extent to which the liquid electrolyte is sufficiently wetted into the long sheet-type electrode 110. For example, the storage may be performed for 20 hours or more, specifically 20 hours to 48 hours, or more specifically 24 hours to 30 hours.

If storage is performed for too short a time outside the above range, sufficient liquid electrolyte wetting may not be achieved, and if storage is performed for too long a time, the process time may be extended regardless of the degree of wetting, which is not preferable.

After this storage process is performed, the liquid electrolyte moves from the liquid electrolyte-wetted substrate 120 to the long sheet-type electrode 110, and the liquid electrolyte may be sufficiently wetted even in the long sheet-type electrode 110.

Therefore, according to another embodiment of the present disclosure, a method for manufacturing a lithium secondary battery using the long sheet-type electrode 110 and a lithium secondary battery 200 manufactured thereby are provided.

Figure 2 schematically shows a cross-sectional view of a lithium secondary battery 200 manufactured in this manner.

Referring to Figure 2, the lithium secondary battery 200 has a structure in which an electrode assembly 210 including an electrode 201 and a separator 202 is incorporated into a secondary battery case 220.

Here, the electrode 201 may be used by cutting the long sheet-type electrode 110 fabricated by the fabrication method of Figure 1 according to the size of the unit electrode to be fabricated.

Additionally, the separator 202 may be fabricated by using the liquid electrolyte-wetted substrate 120 of Figure 1, or fabricated by wetting the liquid electrolyte into a separately used separator. Therefore, the separator 202 may also be an electrolyte-wetted separator in a state of being wetted with the liquid electrolyte before fabricating the electrode assembly 210.

In this case, the wetting of the liquid electrolyte into the separator is not limited, but may be performed by a dip coating, as in the fabrication method of the liquid electrolyte-wetted substrate 120.

The electrode 201 and the separator 202 fabricated in this manner are in a state of being already wetted with the liquid electrolyte, and are bonded together by methods such as stacking or winding to form the electrode assembly 210. For convenience of explanation, the electrode 201 is represented as one unit. However, the positive electrode and the negative electrode may be arranged alternately with a separator 202 interposed therebetween, and both the positive electrode and the negative electrode may be those wetted with a liquid electrolyte in the same manner as described above.

Subsequently, the electrode assembly 210 is incorporated into a secondary battery case 220, and the peripheral part of the secondary battery case 220 is sealed, thereby manufacturing the lithium secondary battery 200.

That is, according to the present disclosure, before fabricating the electrode assembly 210, the electrode 201 and the separator 202 are wetted with a liquid electrolyte, and then these are stacked or wound, and then incorporated in the secondary battery case 220.

Since the electrolyte wetting into the electrode 201 and the separator 202 is completed through this process, the method for manufacturing a lithium secondary battery according to the present disclosure may not include a process of separately injecting a liquid electrolyte into the secondary battery case 220.

Thus, according to the present disclosure, the liquid electrolyte is already sufficiently wetted into the electrode 201 and the separator 202 without separately injecting the liquid electrolyte, thereby enabling the lithium secondary battery 200 to sufficiently exhibit its battery performance.

Therefore, in the lithium secondary battery 200 manufactured in this manner, the content of the liquid electrolyte present separately inside the secondary battery case 220 without being wetted into the electrode 201 and the separator 202 may be 5% by volume or less, specifically 3% by volume or less, or more specifically 1% by volume or less, based on the total volume of the electrolyte

That is, according to the present disclosure, the liquid electrolyte present separately in this manner corresponds to the extent to which a part of the liquid electrolyte wetted in the electrode or separator has leaked out, for example, while applying pressure to the lithium secondary battery 200 and removing the pressure during activation process.

On the other hand, while the liquid electrolyte content inside the secondary battery case 220 is extremely small, the electrode 201 and the separator 202 are directly exposed to the liquid electrolyte in electrode units and separator units to perform electrolyte wetting, so that the electrolyte wetting may be sufficiently performed even to the interior of the electrode 201 or the separator 202. Therefore, the electrolyte existing within the secondary battery case 220 may be 5% by volume or less, or more specifically 1% by volume or less, based on the total volume of the electrode.

Furthermore, since the liquid electrolyte-wetted electrode is stored in a roll form and then used during fabrication, the time required for the liquid electrolyte to volatilize may be reduced, so that the electrode and the separator may exist in a state where they are sufficiently wetted with the liquid electrolyte.

Specifically, the liquid electrolyte wetted in the electrode 201 may be contained in an amount of 101% to 150% based on the total volume of the electrode 201, and the liquid electrolyte wetted into the separator 202 may be contained an amount of 100% to 150% based on the total volume of the separator 202.

Specifically, the liquid electrolyte wetted into the electrode 201 may be contained in an amount of 105% to 150%, more specifically 110% to 130%, based on the total volume of the electrode 201, and the liquid electrolyte wetted into the separator 202 may be contained in an amount of 100% to 130%, more specifically 105% to 130%, based on the total volume of the separator 202.

Thus, according to the present disclosure, by the sufficient wetting of the liquid electrolyte into the electrode 201 and the separator 202, it is possible to reduce the interfacial resistance that may occur due to issues such as a decrease in lithium ion mobility between the electrode 201 and the separator 202.

Specifically, in the present disclosure, the interfacial resistance between the electrode 201 and the separator 202 may be 0.01Ω·cm² to 0.055Ω·cm², more specifically 0.05Ω·cm² to 0.055Ω·cm², and more specifically 0.05Ω·cm² to 0.054Ω·cm².

The interfacial resistance may be calculated by activating the manufactured lithium secondary battery, instantaneously applying a high current of 2.0C to 5.0C, specifically 2.0C to 3.0C, and observing the change in voltage, and then applying Ohm's law to the initial rapid change.

If the interfacial resistance is too high outside the above range, the output characteristics of the lithium secondary battery may deteriorate, which is not preferable.

Furthermore, the ionic resistance between the electrode 201 and the separator 202 may be 0.01Ω·cm² to 0.045Ω·cm², specifically 0.02Ω·cm² to 0.04Ω·cm², and more specifically 0.03Ω·cm² to 0.04Ω·cm².

The ionic resistance may be derived from the voltage change from about 5s to 20s, specifically up to 10s, after observing the voltage change in the same manner as the interfacial resistance.

Hereinafter, preferred examples of the invention, comparative examples, and experimental examples for evaluating them will be described. However, the following examples are only a preferred embodiment of the invention, and are not intended to limit the scope of the invention.

### Example 1

LiFePO₄ as the positive electrode active material, carbon nanotubes as the conductive material, and PVDF polymer as the binder were respectively used. The positive electrode active material : the conductive material : the binder were mixed in a weight ratio of 96.5 : 1.5 : 2 in N-methyl pyrrolidone solvent to prepare a slurry composition. The slurry composition was applied to an aluminum current collector, then dried and rolled in a vacuum oven at 110°C to fabricate a positive electrode.

A glass fiber nonwoven fabric with a pore size of 50% and a thickness of 200 µm was placed in a water bath (40°C) filled with a liquid electrolyte in which LiPF₆ was dissolved at a concentration of 1.0 M in a non-aqueous organic solvent having a composition of ethylene carbonate (EC):γ-butyrolactone (GBL) = 20:80 (volume ratio), and allowed to stand for 24 hours to carry out dip coating. Then, the glass fiber nonwoven fabric and the positive electrode were wound together in a roll form to form a roll assembly, which was then allowed to stand at 60°C for 24 hours to obtain a liquid electrolyte-wetted positive electrode.

A separator (SRS separator coated with Al₂O₃:PVDF=90:10 wt.% on both surfaces of a polyethylene substrate) was prepared. The separator was placed in a water bath (40°C) filled with a liquid electrolyte in which LiPF₆ was dissolved at a concentration of 1.0 M in a non-aqueous organic solvent having a composition of ethylene carbonate (EC):γ-butyrolactone (GBL) = 20:80 (volume ratio), and allowed to stand for 24 hours to carry out dip coating.

The liquid electrolyte-wetted positive electrode and the liquid electrolyte-wetted separator were cut into unit electrodes/separators, and then the separator was stacked so as to be located between the positive electrode and the lithium metal foil negative electrode to form an assembly, which was then incorporated into a pouch-type secondary battery case, thereby fabricate a half-cell.

### Comparative Example 1

A half-cell was fabricated in the same manner as in Example 1, except that the liquid electrolyte was simply applied to the positive electrode fabricated in Example 1 and allowed to stand for 24 hours to prepare a liquid electrolyte-wetted positive electrode, and such a positive electrode was used.

### Comparative Example 2

Instead of separately wetting the positive electrode and separator fabricated in Example 1 with a liquid electrolyte, a separator (SRS separator coated with Al₂O₃:PVDF=90:10 wt.% on both surfaces of a polyethylene substrate was interposed between the positive electrode and the lithium metal negative electrode, and then then placed in a pouch-type secondary battery case, to which the liquid electrolyte was injected, and allowed to stand for 48 hours to fabricate a half-cell.

### Experimental Example 1

The amounts of the liquid electrolyte used in Example 1 and Comparative Example 2 were respectively measured.

The amount of the liquid electrolyte used in Example 1 was calculated by subtracting the weight of the liquid electrolyte remaining after adding and removing the separator from the weight of the liquid electrolyte originally placed in the prepared tank. The amount of the liquid electrolyte used in Comparative Example 2 was calculated based on the weight injected.

Subsequently, the half-cells fabricated in Example 1 and Comparative Example 2 were then charged with a constant current of 0.1C at 25°C until the voltage reached 3.85 V, and then discharged with a constant current of 0.1C until the voltage reached 2.5 V.

Subsequently, the half-cells were disassembled to remove the assembly, and then the total weight of the pouch case and the electrolyte remaining in the case was measured, wherein the weight of the liquid electrolyte unwetted into the electrodes or separator was calculated by subtracting the weight of the pouch case before fabricating the half-cell.

From this, the ratio of the weight of the liquid electrolyte inside the pouch unwetted to the total weight of the electrolyte used was calculated and is shown in Table 1 below.

**[Table 1]**

| | Amount of remaining liquid electrolyte/Total liquid electrolyte (weight ratio, %). |
|---|---|
| Example 1 | 1.0 |
| Comparative Example 2 | 18.5 |

### Experimental Example 2

The half-cell fabricated in Experimental Example 1 was disassembled to withdraw the cell, and then the positive electrode and the separator were separated. The weights of the positive electrode and separator were measured, respectively, and then placed in a vacuum chamber under vacuum conditions to remove the electrolyte.

The weights of the positive electrode and separator from which the electrolyte had been removed were measured again, and the weights of the positive electrode and separator before the electrolyte was evaporated, and the weights of the positive electrode and separator after the electrolyte was removed were measured to obtain the weight of the electrolyte contained in each component.

When the weight of the electrolyte was converted to volume using the density, the volume occupied by the electrolyte was calculated based on the volume of the electrode and the volume of the separator, and is shown in Table 2 below.

The volumes of the electrode and separator were calculated as area x thickness.

**[Table 2]**

| | Electrolyte volume (%) of electrode | Electrolyte volume (%) of separator |
|---|---|---|
| Example 1 | 130 | 100 |
| Comparative Example 2 | 100 | 100 |

### Experimental Example 3

The half-cells fabricated in Example 1 and Comparative Examples 1 and 2 were charged with a constant current of 0.1C at 25°C until the voltage reached 3.85V, and then discharged with a constant current of 0.1C until the voltage reached 2.5V. The initial charge capacity and the initial discharge capacity obtained therefrom are shown in Table 3 below. The ratio of the initial discharge capacity to the initial charge capacity is defined as the initial efficiency and shown in Table 3 below.

Furthermore, the battery capacity was measured while repeating charge-discharge cycles 30 times at 45°C, 0.1C, within the voltage range of 2.5~3.8V. The capacity retention is defined as the ratio of the capacity at the 30th cycle to that at the 1st cycle, and shown in Table 3 below.

**[Table 3]**

| | Initial charge capacity (mAh/g) | Initial discharge capacity (mAh/g) | Initial efficiency (%) | Capacity retention (%) |
|---|---|---|---|---|
| Example 1 | 5.26333 | 5.25411 | 99.8 | 99.2 |
| Comparative Example 1 | 4.44079 | 4.4156 | 99.4 | 90.8 |
| Comparative Example 2 | 5.35924 | 5.35269 | 99.8 | 99.3 |

Referring to Table 3, it can be confirmed that when the positive electrode previously wetted by the fabrication method of the present disclosure was used, it is superior in terms of capacity, efficiency and capacity retention compared to Comparative Example 1 in which a liquid electrolyte was simply applied to the positive electrode, and that when compared to Comparative Example 2 which used the conventional liquid electrolyte injection + wetting process and required twice the process time of the present disclosure, a similar level of performance could be achieved, thereby making it possible to reduce the process time.

### Experimental Example 4

The half-cell fabricated as in Example 1 was charged with a constant current of 0.1 C at 25°C until the voltage reached 3.85 V, and then discharged with a constant current of 0.1 C until the voltage reached 2.5 V. This charge-discharge cycle was repeated three times, and a current equivalent to 2.5 C was applied momentarily to observe the change in voltage. The resistance was calculated from the voltage change using Ohm's law.

When current was applied, the initial rapid change in resistance was defined as interfacial resistance, and then the resistance derived from the voltage change up to approximately 10 seconds was defined as ionic resistance.

The results are shown in Table 4 below.

**[Table 4]**

| | Interfacial resistance (Ω·cm²) | Ionic resistance (Ω·cm²) |
|---|---|---|
| Example 1 | 0.050 | 0.035 |
| Comparative Example 1 | 0.057 | 0.047 |
| Comparative Example 2 | 0.058 | 0.065 |

Referring to Table 4, it can be confirmed that the interfacial resistance and the ionic resistance of the half-cell fabricated by the fabrication method of the present disclosure are significantly lower.

Based on the above disclosure, various applications and modifications can be carried out by those of ordinary skill in the art without deviating from the spirit and scope of the present disclosure.

### [Industrial Applicability]

As set forth above, according to the present disclosure, the electrodes can be sufficiently wetted with liquid electrolyte before manufacturing the lithium secondary battery, so that the battery can manufactured without further electrolyte injection.

In addition, since the electrode is sufficiently wetted with the electrolyte and no additional wetting time is required, thereby simplifying the process and avoiding problems such as resistance increase that may occur in areas not wetted with electrolyte and lifetime characteristics deterioration due to the depletion of an electrolyte, which effectively improves the performance and safety of lithium secondary batteries.

## Claims

1. A method for wetting an electrolyte into an electrode for a lithium secondary battery, the method comprising fabricating and storing a roll assembly in a state where a long sheet-type electrode and a liquid electrolyte-wetted substrate are wound together.

2. The method for wetting an electrolyte according to claim 1,
wherein the storage temperature is 30°C to 80°C.

3. The method for wetting an electrolyte according to claim 1,
wherein the storage time is 20 hours to 48 hours.

4. The method for wetting an electrolyte according to claim 1,
wherein the liquid electrolyte-wetted substrate is a nonwoven fabric, a polymer membrane, or a separator.

5. The method for wetting an electrolyte according to claim 1,
wherein the liquid electrolyte-wetted substrate is fabricated by a dip-coating method in which the substrate is immersed into a liquid electrolyte solution.

6. The method for wetting an electrolyte according to claim 1,
wherein the roll assembly is fabricated by preparing the long sheet-type electrode wound in a roll form and the liquid electrolyte-wetted substrate also wound in a roll form, respectively, followed by unwinding them and rewinding them together.

7. A method for manufacturing a lithium secondary battery, comprising incorporating an electrode assembly containing an electrode and a separator into a secondary battery case,
wherein the electrode is an electrolyte-wetted electrode which is fabricated by the method for wetting an electrolyte as set forth in any one of claims 1 to 5.

8. The method for manufacturing a lithium secondary battery according to claim 7,
wherein the separator is an electrolyte-wetted separator in a state of being wetted with the liquid electrolyte before fabricating the electrode assembly.

9. The method for manufacturing a lithium secondary battery according to claim 7,
which does not comprise a step of separately injecting a liquid electrolyte into the secondary battery case.

10. A lithium secondary battery having a structure in which an electrode assembly comprising an electrode wetted with a liquid electrolyte and a liquid electrolyte-wetted separator is incorporated into a secondary battery case,
wherein the liquid electrolyte existing in the secondary battery case without being wetted into the electrode or separator accounts for 5% by weight or less based on the total weight of the electrolyte.

11. The lithium secondary battery according to claim 10,
wherein the liquid electrolyte existing in the secondary battery case without being wetted into the electrode or separator accounts for 1% by weight or less based on the total weight of the electrolyte.

12. The lithium secondary battery according to claim 10,
wherein the liquid electrolyte wetted into the electrode is contained in an amount of 100% to 130% based on the total volume of the electrode, and
the liquid electrolyte wetted into the separator is contained in an amount of 100% to 150% based on the total volume of the separator.

13. The lithium secondary battery according to claim 10,
wherein the interfacial resistance between the electrode and the separator is 0.01Ω·cm² to 0.055Ω·cm².

14. The lithium secondary battery according to claim 10,
wherein the ionic resistance between the electrode and the separator is 0.01Ω·cm² to 0.045Ω·cm².
